Europäisches Patentamt

European Patent Office

Office européen des brevets

(19)

(11) Publication number: **0 127 243**
A1

(12) # EUROPEAN PATENT APPLICATION

(21) Application number **84200763.5**

(22) Date of filing: **25.05.84**

(51) Int. Cl.⁴ **G 11 B 11/10**
**G 11 B 13/04, G 11 B 5/00**
**G 02 F 1/00**

(30) Priority **31.05.83 NL 8301916**

(43) Date of publication of application:
**05.12.84 Bulletin 84/49**

(84) Designated Contracting States:
**BE DE FR GB IT**

(71) Applicant. **N.V. Philips' Gloeilampenfabrieken**
**Groenewoudseweg 1**
**NL-5621 BA Eindhoven(NL)**

(72) Inventor: **Martens, Jan Willem Dirk**
**c/o INT. OCTROOIBUREAU B.V. Prof. Holstlaan 6**
**NL-5656 AA Eindhoven(NL)**

(72) Inventor: **Peeters, Winfried Lodewijk**
**c/o INT. OCTROOIBUREAU B.V. Prof. Holstlaan 6**
**NL-5656 AA Eindhoven(NL)**

(74) Representative: **Koppen, Jan et al,**
**INTERNATIONAAL OCTROOIBUREAU B.V. Prof.**
**Holstlaan 6**
**NL-5656 AA Eindhoven(NL)**

(54) **Thermo-magneto-optical recording device and recording element therefor.**

(57) Thermo-magneto-optical recording and read-out is provided in which an improved signal to noise ratio is provided in the reading process combined with a high recording density and in which the writing process is efficient. The recording element has a substrate 15 which supports a magneto-optically active layer 16 between a laser source and a layer 18 reflecting radiation from the laser source. The magneto-optically active layer comprises a polycrystalline oxidic material based on $Fe^{3+}$ having spinel structure and a thickness $d_1$ and is separated from the reflecting layer by a layer 17 of a dielectric material having a thickness $d_2$, $d_1$ and $d_2$ being chosen to be so that destructive interference occurs between the plane polarized radiation of the laser source returning from the surface of the magneto-optically active layer and the radiation from the reflecting layer and having traversed the two layers at least twice, while the thickness $d_1$ is too small to produce destructive interference in the absence of the dielectric layer.

FIG. 1

FIG. 2a

Thermo-magneto-optical recording device and recording
element therefor.

The invention relates to a thermo-magneto-optical
recording device, comprising a recording element having a
substrate which supports a magneto-optically active layer,
a source of laser radiation, means to focus radiation of
the laser source onto selective places of the recording
element, and magneto-optical detection means placed in the
path of radiation returning from the magneto-optically
active layer, comprising a polarisation optical system
and a photo-electric detector, the magneto-optically active
layer being present between the laser source and a layer
reflecting radiation from the laser source. The invention
also relates to a recording element for such a device.

It is known from Journal of Applied Physics,
Vol. 53, No. 6, June 1982, pp. 4491-93 that materials,
for example MnBi, GdFe, TbFe and GdCo may be used for a
recording element, for example in the form of a magneto-
optical disc, which is destined for use in an optical recording device. These materials are usually vapour-deposited or sputtered in a vacuum onto a glass substrate, a
silicon plate or the like so as to provide a thin film for
a magneto-optical recording element. Magneto-optical recording elements have the following properties in common.
First, the easy axis of magnetisation is perpendicular
to the surface of the film, and second, the magnetic transition temperatures, which are the Curie temperature and
the compensation temperature of the film material, are comparatively low.

Since the easy axis of magnetisation is in a
direction perpendicular to the surface of the film, binary
information in the form of "1"s and "0"s can be recorded
by using upward, and downward magnetisation of the film on
the substrate for these two values and hence the device
may be used as a digital memory. A method of thermo-magnetically recording information which is known as Curie point writing is as follows. First of all, the whole film is magnetized , for example, in the downward direction and is designated "0". When a "1" is to be recorded, a laser beam is directed to the region where the recording is to be effected and simultaneously an upwardly directed external magnetic field is applied. The irradiated region is heated by the laser energy to a temperature in the proximity of the Curie temperature, and, upon cooling, the magnetisation of the external field is "captured" and the direction thereof is adopted by the film, so that a "1" is recorded. When the information "0" is to be recorded, the relevant place is not irradiated by the laser beam, because the initial state is already "0". When a region which is not irradiated by a laser beam is kept at a temperature which is sufficiently far below the Curie temperature or has a sufficiently large coercive force $H_c$, its direction of magnetisation is not reversed by an externally applied magnetic field and the downward magnetisation on "0" is maintained.

When the stored information is read, a plane polarized light beam  is used which scans the recording element in which, depending on whether the magnetisation in a read bit place is "up" or "down", the reflected beam experiences a rotation of the plane of polarisation in one or the other direction. This is referred to as magneto-optical reading.

In order to make the use of thermo-magnetic recording systems with magneto-optical reading attractive, certain conditions need to be satisfied both as regards writing and reading.

In order to achieve a sufficient signal-to-noise ratio, the magneto-optical quality factor or figure of merit which comprises the product of the magneto-optical angle of rotation squared and the transmission or reflection of the film must be as large as possible. The magneto-optical figure of merit is comparatively small when the metallic magneto-optical materials mentioned hereinbefore are used in reflection because the magneto-optical rotation in reflection (the Kerr rotation) is comparatively small, but is also small when used in transmission because the absorption is high. From the above-mentioned publication in Journal of Applied Physics it is known that when metallic layers are used in reflection the figure of merit can be increased by making the metallic layer sufficiently thin and by placing a reflector behind it at an accurately determined distance, producing the so-called trilayer system.

On the other hand, a higher magneto-optical figure of merit can be realized by using mono-crystalline magneto-optical materials having a garnet structure which in transmission in a given wavelength range show a very high Faraday rotation in combination with a low absorption. However, as a result of the low absorption this type of material has disadvantages in the writing process. Due to the low absorption there is a poor coupling - in of light into the film, i.e. the energy transfer is low. As a result of this, much more laser power is necessary to heat the layer to the Curie temperature than is the case with metallic layers of comparable thickness. Although the coupling-in can be increased by making the layer thicker, very small bits cannot be recorded in thick layers. The recording density in that case is not optimum.

It is an object of the invention to provide a device of the type mentioned in the opening paragraph in which an improved signal-to-noise ratio in the reading process is combined with a sufficiently high recording density and with an efficient writing process.

The invention provides a thermo-magneto-optical recording device, comprising a recording element having a substrate which supports a magneto-optically active layer, a source of laser radiation, means to focus radiation of the laser source onto selected places of the recording element, the magneto-optically active layer being present between the laser source and a layer reflecting radiation from the laser source, and magneto-optical detection means placed in the path of radiation returning through the magneto-optically active layer, comprising a polarisation optical system and a photo-electric detector, wherein the magneto-optically active layer is a poly-crystalline oxidic layer of a material based on $Fe^{3+}$ and having a spinel structure and a thickness $d_1$, and wherein a layer of a dielectric material which has a thickness $d_2$ and is transparent to radiation of the laser source is present between the magneto-optically active layer and the reflective layer, $d_1$ and $d_2$ being chosen so that destructive interference occurs between the plane polarized radiation of the laser source returning from the surface of the magneto-optically active layer and the radiation returning from the reflective layer and which has traversed the two layers at least twice, the thickness $d_1$ being too small to produce such destructive interference in the absence of the dielectric layer.

Layers of oxidic, ferro-magnetic materials based on iron having a spinel structure, for example magnetite $(Fe_3O_4)$ and, in particular, substituted or non-substituted cobalt-ferrite $(co, Fe)_3O_4$ in themselves do not show a high magneto-optical Faraday or Kerr-effect, and therefore may not seem fit for use if the signal-to-noise ratio of a magneto-optical system is to be increased. But it has been found possible using the specific absorption coefficient in a specific wavelength range to design an optical layer system with these layers which, as regards reading properties, is much superior to systems having metallic films and, as regards writing properties, is much superior to systems having garnet films.

Experiments underlying the present invention have demonstrated that the thickness of the magneto-optically active layer of an oxidic iron-based poly-crystalline material placed between the light source and a reflective layer may be chosen so that destructive interference occurs for the source wavelength. This means that the light ray reflected at the outer face of the active layer is in opposite phase with the light rays returning through this layer _via_ the reflecting layer. This is associated with an extreme value in the magneto-optical rotation of the detected radiation at certain thicknesses of the magneto-optically active layer which are specific for the material. That is, the magneto-optical effect as a function of the layer thickness shows a "peaked" structure. The above implies that if for certain reasons the thickness of the magneto-optical layer cannot be freely chosen, the magneto-optical effect may be weak. The invention provides the interposition of a dielectric layer between the magneto-optically active layer and the reflective layer. By suitably choosing the thickness of the dielectric layer, the peaked structure of the magneto-optical effect can be "smeared" as a function of the layer thickness. As a result, the thickness of the magneto-optically active layer is less critical and can be given, for example, a thickness which from the point of view of thermal conductivity is most favourable. As the layer is made thicker, spot widening becomes more and more prominent.

Although the magneto-optical rotation increases with increasing value of the thickness of the magneto-optically active layer the reflection decreases. This implies that at this point also a compromise determines the layer thickness to be used in a system. On the one hand the writing process requires a coupling-in of the light which is as efficient as possible, and hence a reflection which is as low as possible. On the other hand, the reading process requires the signal to be sufficiently strong and hence a lower limit is imposed upon the reflection, dependent on the system. Said lower limit for a practical case is, for example, 10%.

A laser which is very suitable for the present application is an AlGaAs laser which emits radiation in the wavelength range from 730-870 nm. Optionally, an He-Ne laser which operates in a range around 630 nm, could be considered.

Using their favourable absorption coefficient in the wavelength range from 400-900 nm, the above-described optimisation is possible in oxidic materials based on $Fe^{3+}$ and having a spinel structure, for example, the said magnetite and cobalt ferrites, but not in materials having a garnet basis which have too low an absorption therefor.

The reflecting layer may be a multilayer dielectric dichroic mirror consisting of 1/4 $\lambda$ layers having alternately a high and low refractive index, or a metal layer (for example Ag, Al or Au).

The dielectic intermediate layer may also serve to increase the optical quality of the system of layers. Since the poly-crystalline magneto-optically active layer generally has a granular structure, which may be the case when the layer is provided by means of a spraying method rather than when the layer is provided by means of a sputtering process, the provision thereon of a smooth dielectric layer, preferably having approximately the same refractive index, may cause noise, occurring as a result of the granularity, to be supressed.

By providing an intermediate layer of a dielectric material having a suitable surface tension, by means of a spinning process, on the magneto-optically active layer, the top of the layer of dielectric material on which the reflective layer is provided in a subsequent stage, may be made very smooth. Thereby the occurrence of stray phenomena at the reflective layer is avoided as much as possible. Materials for the intermediate layer which are suitable from the point of view of spinnability are, in addition to photo-lacquers, polymerized synthetic resins, for example epoxy resins, phenol resins, poly-carbonate resins, polyimide resins and polyacrylate resins.

When at a selected wavelength in the range from 400-900 nm the refractive index of the dielectric material does not differ more than 15% from that of the magneto-optically active material, little reflection will occur at the "rough" surface of the magneto-optically active layer. Thereby also noise is suppressed. In combination with a magneto-optically active layer of cobalt ferrite (n $\sim$ 2.7) for example, CeO (n $\sim$ 2.7) and Zns (n $\sim$ 2.4) are considered suitable as a material for the dielectric intermediate layer from the point of view of

refractive index.

The invention relates in particular to a thermo-magneto-optical memory device as described hereinbefore having a recording element in the form of a rotatable disc.

An embodiment of the invention will now be described in greater detail, by way of example, with reference to the acoompanying drawings, in which,

Fig. 1 shows diagrammatically a thermo-magneto-optical recording device,

Figs. 2a and 2b are cross-sectional views through alternative recording elements for a thermo-magneto-optical recording device according to the invention,

Fig. 3 is a graph showing the Kerr rotation $\Theta_K$ for light having a wavelength of 780 nm as a function of the optical thickness $n_1 d_1$ of the magneto-optical layer of a system of layers shown in the inset,

Fig. 4 is a graph showing the reflection coefficient R, the Kerr rotation $\Theta_K$ and the figure of merit $(2 \Theta_K)^2 R$ as a function of the optical thickness of the dielectric layer of a system of layers shown in the inset of Fig. 3,

Fig. 5 is a graph showing the optimum optical thickness $n_2 d_2$ (opt) of the dielectric layer of a system of layers shown in the inset of Fig. 3 as a function of the thickness of the associated magneto-optically active layer, and

Fig. 6 ia a graph showing the optimized Kerr rotation $2 \Theta_K$ as a function of the optical thickness $n_1 d_1$ of the magneto-optically active layer of the system of layers shown in the inset of Fig. 3.

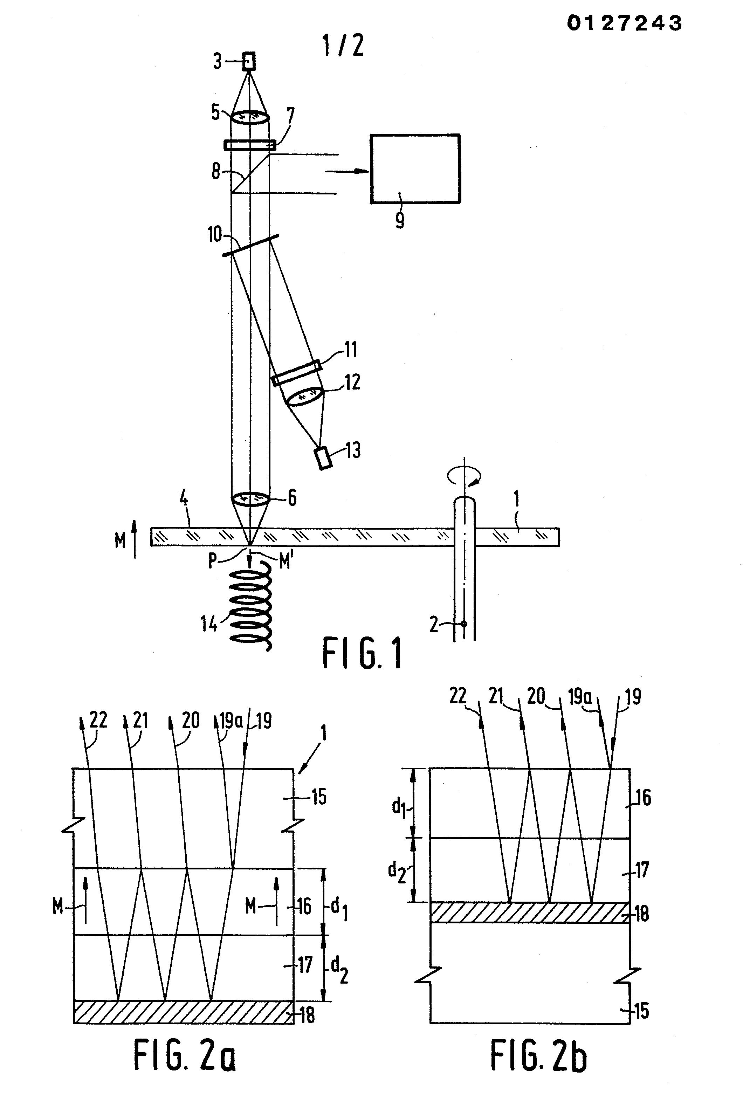

Fig. 1 shows a thermo-magneto-optical recording device having a recording element 1 which is shown as a section of a disc rotable about an axis 2. A laser source 3 is accommodated at some distance above the surface 4 of the recording element 1. The laser source 3 is, for example, an AlGaAs-diode laser which can emit light waves having a wavelength in the range between 730 and 870 nm. A chracteristic wavelength is 780 nm. Such lasers are small and suitable for being arranged so as to be movable (for example radially) with respect to the recording element.

The light of laser source 3 is focused on point P of the recording element 1 by means a system of lenses 5,6. A polarizer 7 which is used at least in the reading process is placed in the light path. A semi-transmissive mirror 8 sharing a transmission T of for example 90%, is placed in the light path so as to send a part of the light after reflection to a detection device 9 for controlling the correct focusing. A semi-transmissive mirror 10 (T = 75%) is placed in the light path to send a part of the light after reflection, _via_ an analyzer 11 and a lens 12, to a photo-electric detector 13 (for example an Si-avalanche detector). In the writing process, focused radiation of laser source 3 is used to heat a selected information bit in magneto-optically active layer 16 (see fig. 2) of recording element 1, which has been previously magnetized in the direction M, to a temperature in the proximity of its Curie temperature. A characteristic Curie temperature of unsubstituted cobalt-ferrites is approximately $520^{\circ}C$. Such a rise in temperature, together with the energisation of coil 14 with which an opposite field M'in the order of 1,000 Oe is generated, is sufficient to reverse the magnetisation of the irradiated information bit upon cooling.

The reading process takes place in reflection with reduced power by means of the same laser source 3. The plane of polarisation of the plane polarized light beam incident on the recording element 1 is rotated through a given angle after reflection. Dependent on the presence of a "0" or a "1" said rotation is converted into an intensity difference by means of the analyser 11 in front of the photo diode 13. In order to obtain a combination of a low writing power with a maximum magneto-optical effect, recording element 1 is constructed from a magneto-optically active layer having a very specific composition and thickness and is combined with a dielectric layer and a reflecting layer.

    Fig. 2a shows a non-magnetic substrate 15 which, for example, may be of (amorphons) $SiO_2$, on which a magneto-optically active layer 16 is provided. Within the scope of the invention the layer 16 consists of a poly-crystalline oxidic material based on $Fe^{3+}$, having a spinel crystal structure, for example, $Fe_3O_4$ or $(Co, Fe)_3O_4$. By way of example, materials of the type $(Co, Fe)_3O_4$ (cobalt-ferrite) will be described hereinafter, in particular having the composition $CoFe_2O_4$. The present poly-crystalline materials have been provided on a surface which is sufficiently large for the present application, for example, by a spraying process with a sufficiently large perpendicular magnetic anisotropy. This in contrast with, for example, mono-crystalline garnet materials. Moreover, their absorption at the wavelengths in question (730-870 nm) is very favourable both as regards the writing process and the reading process. Thickness $d_1$ of layer 16 is, within certain limits, related to the wavelength of the laser source 3 used and to the absorption of the material of the layer 16 so as to obtain a useful magneto-optical effect originating from a beam 19a reflected at the interface 16/15 and beams 20, 21, 22 etc. returning after reflection at a metallic reflective layer 18. As a result of the absorption in the layer 16, the reflection $\neq$ 1 at the layer 18, and the reflection at the interface 15/16, the intensities of the returning light beams become gradually smaller. A dielectric layer 17, which is transparent to the wavelength used and has a thickness $d_2$ which is chosen to obtain an optimum magneto-optical rotation, in combination with the thickness $d_1$ of the layer 16, is present between the layers 16 and 18. How this choise is made, will be explained hereinafter.

    In the fig. 2a construction the light is incident on the magneto-optically active layer 16 via the substrate 15. However, as shown in Fig. 2b, the construction may also be such that the light is incident directly on the magneto-optically active layer 16. In that case the reflective layer 18 is present between the substrate 15
and the magneto-optically active layer 16.

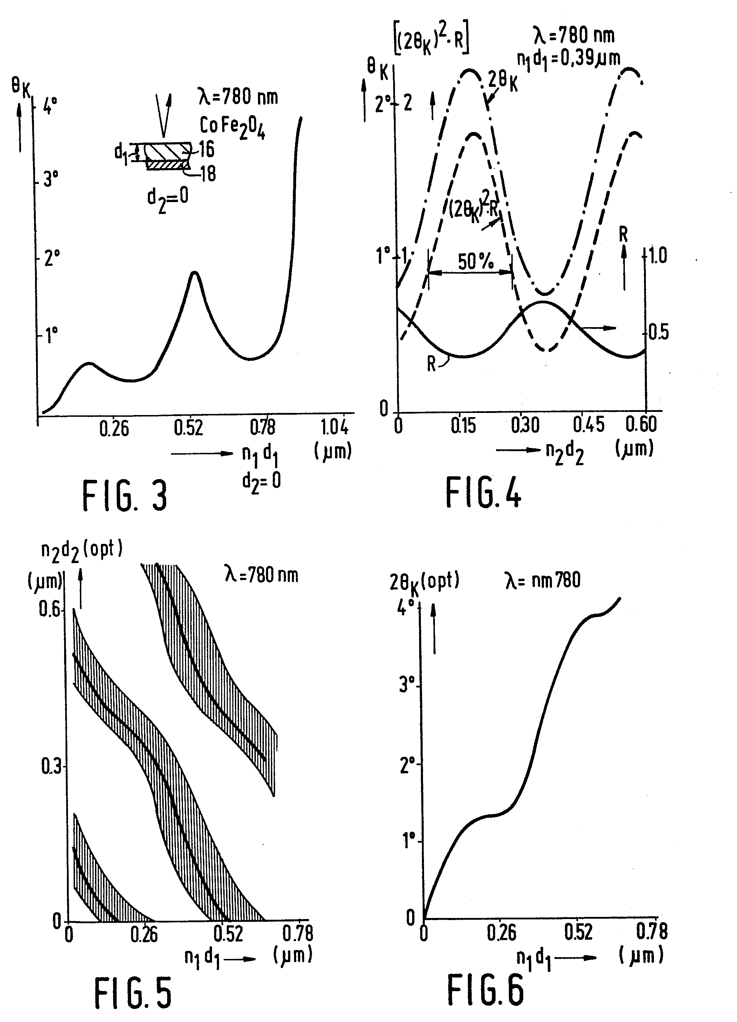

In a recording element having a layer structure
as shown in the inset in fig. 3 it appears that in the
absence of an intermediate layer 17 ($d_2$ = 0) the Kerr
rotation 2 $\theta_K$ as a function of the  optical thickness $n_1d_1$
of the magneto-optically active $CoFe_2O_4$ layer 16 has a
strongly peaked variation in which the layer thicknesses
at which the maxima occur depend on the wavelength   of
the light used. The graph shown in fig. 3 represents the
situation when light having a wavelength $\lambda$ = 780 nm is
used. The peaked variation of the Kerr rotation is associated with whether destructive interference in the layer
16 does or does not occur. That destructive interference
occurs with a value of $n_1d_1$ of 0.57 $\mu$m and that the
light beam is not merely doubled up appears from the fact
that in the latter case the rotation cannot be much more
than twice the Faraday rotation, being 1.6$^o$ for a layer
thickness of 0.57 $\mu$m. As a result of destructive interference, however, a rotation 2 $\theta_K$ of  3.5$^o$ is measured.
An extreme value 2 $\theta_K$ = 8$^o$ occurs at $n_1d_1$ = 0.96 $\mu$m.
These maxima in the rotation are associated with reflec-
tion minima. At $n_1d_1$ = 0.57 $\mu$m the reflection coefficient
R is 20%, at $n_1d_1$ = 0.96 $\mu$m, R is 6% (Fig. 4).

If now for other reasons the layer 16 cannot
have a thickness at which a maximum in the Kerr rotation
occurs, the value of the rotation drops rather strongly.
In that case said drop can be restricted considerably
according to the invention by interposing a layer 17 of
a dielectric material between the magneto-optically
active layer 16 and the reflective layer 18. In order to
reach the desired result the optical thickness $n_2d_2$ of
such an intermediate layer 17 must be accurately adjusted
to the optical thickness $n_1d_1$ of the layer 16. This will
be explained with reference to fig. 4. This figure shows
how, starting from a layer 16 of $CoFe_2O_4$ having an optical
thickness $n_1d_1$ = 0.39 $\mu$m, the Kerr rotation 2 $\theta_K$ varies
by the interposition of a dielectric layer 17 having an

optical thickness $n_2d_2$ varying from 0 to 0.6 /um. The variation of the reflection coefficient R and the variation of the figure of merit $(2 \Theta_K)^2 R$ are also shown. From this it can be derived that a suitable value for $n_2d_2$ would be, for example, 0.19 /um. A wider or narrower range of values about 0.19 /um may also be useful, dependent on the maximum reduction of $(2 \Theta_K)^2 R$ (for example 50%) which still leads to a useful system.

The best suitable optical thickness $n_2d_2$ for a dielectric intermediate layer 17 can be determined with reference to solid lines shown in the graph of figure 5 for optical thicknesses $n_1d_1$ of a magneto-optically active layer 16 of $CoFe_2O_4$ varying from 0 to 0.78 /um. A shaded area is drawn about each line. Said shaded areas indicate which values of $n_2d_2$ are still useful when a reduction up to 50% of the optical Kerr rotation is permitted.

Fig. 6 shows the Kerr rotation $2 \Theta_K$ (opt) optimized in the manner described hereinbefore as a function of the optical thickness $n_1d_1$ of a magneto-optically active layer 16 of $CoFe_2O_4$ in the system of layers of fig. 2a. The difference from the situation shown in fig. 3 is evident.

Spinning a dielectric intermediate layer 17 from the liquid phase (for example, a diluted photolacquer) on layer 16 may be of great advantage in a system of layers of the type shown in fig. 2a to obtain a smooth surface on which the reflecting layer 18 can be provided. The smoother this surface is, the less will be the noise. An improvement of 20 dB has proved realizable in this manner. Whether or not it is used in combination with the spinning of layer 17, the material of layer 17 desirably has a refractive index n which corresponds as much as possible to that of the material of the layer 16.

It is to be noted that for the $Fe^{3+}$ ions in $(Co, Fe)_3O_4$ other ions, for example, $Al^{3+}$, $Rh^{3+}$, $Mn^{3+}$ and $Cr^{3+}$ may be substituted to reduce the Curie temperature, if necessary. When the Curie temperature drops, however, the magnetisation and hence the rotation at room temperature also drop. If this is not desired, instead of the

above-mentioned substitutions $(Co^{2+} + X)$, substitution may be done by means in which X is a quadrivalent or a quintavalent metal ion (for example $Ti^{4+}$, $Sn^{4+}$, $Ir^{4+}$, $V^{5+}$). Although the magnetisation at room temperature also drops the detrimental effect thereof is restricted in that the rotation increases slightly.

Another effect of the substitution of metal ions, for example, $CoFe_2O_4$, is that the refractive index $\underline{n}$ changes. For example, if $\underline{n}$ becomes smaller, a larger thickness of the magneto-optically active layer is necessary to maintain the same optimum value of the Kerr rotation. If a thicker layer is not desired, for example, because more thermal energy would then be necessary to write the bits, the invention provides the possibility of restricting the loss in Kerr rotation which would occur by suitably choosing the thickness of the dielectric intermediate layer.

1.      A thermo-magneto-optical recording device, comprising a recording element having a substrate which supports a magneto-optically active layer, a source of laser radiation, means to focus radiation of the laser source onto selected places of the recording element, the magneto-optically active layer being present between the laser source and a layer reflecting radiation from the laser source, and magneto-optical detection means placed in the path of radiation returning through the magneto-optically active layer, comprising a polarization optical system and a photo-electric detector, wherein the magneto-optically active layer is a poly-crystalline oxidic layer of a material based on $Fe^{3+}$ and having a spinel structure and a thickness $d_1$, and wherein a layer of a dielectric material which has a thickness $d_2$ and is transparent to radiation of the laser source is present between the magneto-optically active layer and the reflective layer, $d_1$ and $d_2$ being chosen so that destructive interference occurs between the plane polarized radiation of the laser source returning from the surface of the magneto-optically active layer and the radiation returning from the reflective layer and which has traversed the two layers at least twice, the thickness $d_1$ being too small to produce such destructive interference in the absence of the dielectric layer.

2.      A device as claimed in Claim 1 wherein the layer of dielectric material is a material which is provided by spinning from the liquid phase.

3.      A device as claimed in Claim 2, wherein the dielectric material is a photolacquer or a polymerized synthetic resin.

4.      A device as claimed in Claim 1, wherein the layer of dielectric materials has a refractive index at a selected wavelength in the range from 400-900 nm which does not differ more than 15% from the refractive index of the
magneto-optically active material at the selected wavelength.

5.       A device as claimed in anyone of the preceding
Claims wherein the oxidic material based on $Fe^{3+}$ and having
a spinel structure is a cobalt-ferrite.

6.       A device as claimed in anyone of the preceding
Claims, wherein the laser source produces radiation having
a wavelength selected in the range from 730 to 870 nm.

7.       A device as claimed in anyone of the preceding
Claims, wherein the substrate is a rotatable disc.

8.       A recording element for a device as claimed
in anyone of the preceding Claims.

9.       A recording element as claimed in Claim 8, having
a magneto-optically active layer comprising a poly-crystalline oxidic material based on $Fe^{3+}$, having a spinel struc-
ture, and an optical thickness between 0.025 and 3 /um
and having a layer of a dielectric material of an optical
thickness which is adapted to the thickness of the magne-
to-optically active layer as shown in the graph of figure
5 of the accompanying drawings.

10.       A thermo-magneto-optical recording device
substantially as described with reference to the accompanying drawings.

11.       A recording element for a thermo-magneto-optical
recording device substantially as described with reference
to figures 2 to 6 inclusive of the accompanying drawings.

0127243

FIG.1

FIG. 2a

FIG. 2b

0127243

FIG. 3

FIG.4

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,D | JOURNAL OF APPLIED PHYSICS, vol. 53, no. 6, June 1982, pages 4485-4494, American Institute of Physics, New York, US; MASUD MANSURIPUR et al.: "Signal and noise in magneto-optical readout" <br> * Page 4485, abstract and right-hand column, lines 11-18; figure 1; page 4486, left-hand column, lines 1,2; figures 2,3; page 4486, left-hand column, line 24 - page 4487, left-hand column, line 10; pages 4491-4493, section V: "Interference enhancement of the Kerr effect" * | 1,6-8 | G 11 B 11/10 <br> G 11 B 13/04 <br> G 11 B 5/00 <br> G 02 F 1/00 |
| | --- | | |
| Y | ELECTRONICS INTERNATIONAL, vol. 55, no. 15, 28th July 1982, pages 52,54, New York, US; S.W. FIELDS: "Fourth layer improves magneto-optic disk" <br> * Whole article * | 1,7 | |
| | --- | | **TECHNICAL FIELDS SEARCHED (Int. Cl. ³)** |
| Y | IEEE TRANSACTIONS ON MAGNETICS, vol. MAG-12, no. 6, November 1976, pages 773-775, New York, US; N.N. EVTIHIEV et al.: "Co-ferrite - new magnetooptic recording material" <br> * Whole article * | 1,8 | G 11 B <br> G 02 F <br> H 01 F |
| | --- | | |
| A | IDEM | 5,9 | |
| | ---      -/- | | |

The present search report has been drawn up for all claims

| Place of search <br> THE HAGUE | Date of completion of the search <br> 16-08-1984 | Examiner <br> OLDROYD D.L. |
|---|---|---|

European Patent
Office

**EUROPEAN SEARCH REPORT**

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl. ³) |
|---|---|---|---|
| A | IEEE TRANSACTIONS ON MAGNETICS, vol. MAG-13, no. 5, September 1977, pages 1400-1402, New York, US; M. SATOU et al.: "Formation of ferrite thin films by vacuum evaporation with annealing process" * Whole article * | 1,5,7-9 | |
| A | CA-A- 805 652 (NORTHERN ELECTRIC) * Page 1, lines 1-8; page 2, lines 19-27; pages 6-7, section entitled "example 1" * | 1,5,8,9 | |
| A | IBM TECHNICAL DISCLOSURE BULLETIN, vol. 19, no. 1, June 1976, page 359, New York, US; C.H. BAJOREK et al.: "Cobalt ferrite films" * Whole article * | 5,8,9 | TECHNICAL FIELDS SEARCHED (Int. Cl. ³) |
| A | GB-A-2 002 338 (PHILIPS) * Whole document * | 5,8,9 | |
| A | US-A-3 928 870 (AHRENKIEL et al.) * Column 1, lines 7-48; column 3, lines 28-32; column 6, line 52 - column 11, line 58 * | 1,5,7-9 | |
| A | US-A-3 859 129 (CHEN et al.) * Whole document * | 5,8,9 | |
| | --- -/- | | |

The present search report has been drawn up for all claims

| Place of search THE HAGUE | Date of completion of the search 16-08-1984 | Examiner OLDROYD D.L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

| Category | Citation of document with indication, where appropriate, of relevant passages | Relevant to claim | CLASSIFICATION OF THE APPLICATION (Int. Cl. ³) |
|---|---|---|---|
| | **DOCUMENTS CONSIDERED TO BE RELEVANT** | | **Page   3** |
| A | GB-A-2 083 677  (MATSUSHITA)<br>* Whole document * | 1 | |
| | ----- | | |
| | | | **TECHNICAL FIELDS SEARCHED (Int. Cl. ³)** |
| | The present search report has been drawn up for all claims | | |

| Place of search<br>THE HAGUE | Date of completion of the search<br>16-08-1984 | Examiner<br>OLDROYD D.L. |
|---|---|---|